# EUROPÄISCHE PATENTSCHRIFT

(11) **EP 3 098 122 B1**
(45) Veröffentlichungstag und Bekanntmachung des Hinweises auf die Patenterteilung: **04.09.2019**
(21) Anmeldenummer: 16001179.7
(22) Anmeldetag: 24.05.2016
(51) Int. Cl.: B60S 1/52, B60S 1/60, B60Q 1/00

(54) **FAHRZEUG, INSBESONDERE NUTZFAHRZEUG, MIT EINEM SCHEINWERFERMODUL**
VEHICLE, IN PARTICULAR COMMERCIAL VEHICLE, WITH A HEADLIGHT MODULE
VEHICULE, EN PARTICULIER VEHICULE UTILITAIRE, EQUIPE D'UN MODULE DE PHARE

(30) Priorität: 29.05.2015 DE 102015006989
(43) Veröffentlichungstag der Anmeldung: 30.11.2016
(73) Patentinhaber: MAN Truck & Bus SE, 80995 München (DE)
(72) Erfinder: Klukas, Michael, 81669 München (DE)
(74) Vertreter: Liebl, Thomas

(56) Entgegenhaltungen:
- EP-A1- 1 055 572
- DE-U1- 9 309 852
- DE-U1-202012 004 251
- FR-A1- 2 721 276
- US-A1- 2001 030 874

## Beschreibung

Die Erfindung betrifft ein Fahrzeug, insbesondere ein Nutzfahrzeug, mit einem Scheinwerfermodul nach dem Oberbegriff des Patentanspruches 1.

Ein Scheinwerfermodul eines Fahrzeugs weist üblicherweise ein transparentes bzw. lichtdurchlässiges Abdeckelement bzw. ein Scheinwerferglas auf, mittels dem eine Leuchteinrichtung des Scheinwerfermoduls abgedeckt ist. Dadurch ist die Leuchteinrichtung geschützt und es können von der Leuchteinrichtung abgestrahlte Lichtstrahlen durch das lichtdurchlässige Abdeckelement hindurch nach außen strahlen. Die Leuchteinrichtung kann dabei beispielsweise durch eine gewöhnliche Glühlampe gebildet sein.

Weiter ist es auch bekannt, bei einem Fahrzeug eine Scheinwerfer-Reinigungsanlage vorzusehen, mittels der das lichtdurchlässige Abdeckelement des Scheinwerfermoduls gereinigt werden kann. Eine derartige Scheinwerfer-Reinigungsanlage weist üblicherweise eine Sprüheinrichtung auf, mittels der das Abdeckelement mit einer Flüssigkeit, insbesondere mit einer Reinigungsflüssigkeit, besprüht werden kann.

Die Sprüheinrichtung ist dabei als separates Bauteil ausgebildet, das separat von dem Scheinwerfermodul am Fahrzeug montiert wird. Diese separate Montage hat jedoch den Nachteil, dass bei einer Montage einer Sprüheinrichtung die Ausrichtung bzw. die Position der Sprüheinrichtung relativ zu dem Scheinwerfermodul stets derart eingestellt werden müssen, dass die zu reinigenden Flächen des Abdeckelements zuverlässig mit der Sprüheinrichtung besprüht werden können. Diese Einstellung ist jedoch zeitintensiv, aufwendig und erfordert häufig auch den Einsatz zusätzlicher Montagewerkzeuge. US-A-2001/0030874 offenbart den Oberbegriff des Anspruchs 1.

Aufgabe der Erfindung ist es daher, ein Fahrzeug, insbesondere ein Nutzfahrzeug, bereitzustellen, bei dem die Montage der Sprüheinrichtung vereinfacht ist.

Diese Aufgabe wird durch die unabhängigen Ansprüche gelöst. Bevorzugte Weiterbildungen sind in den Unteransprüchen offenbart.

Gemäß Patentanspruch 1 wird ein Fahrzeug, insbesondere ein Nutzfahrzeug, vorgeschlagen, mit einem Scheinwerfermodul, das ein lichtdurchlässiges Abdeckelement, insbesondere ein Scheinwerferglas, aufweist, mittels dem eine Leuchteinrichtung des Scheinwerfermoduls abgedeckt ist. Zudem weist das Fahrzeug eine Scheinwerfer-Reinigungsanlage auf, mittels der das Abdeckelement des Scheinwerfermoduls gereinigt werden kann, wobei die Scheinwerfer-Reinigungsanlage eine Sprüheinrichtung aufweist, mittels der das Abdeckelement mit einer Flüssigkeit, insbesondere mit einer Reinigungsflüssigkeit, besprüht werden kann. Erfindungsgemäß ist die Sprüheinrichtung dem Scheinwerfermodul zugeordnet, so dass die Sprüheinrichtung und das Scheinwerfermodul eine Baueinheit ausbilden.

Auf diese Weise wird die Montage der Sprüheinrichtung und des Scheinwerfermoduls deutlich vereinfacht, da die Sprüheinrichtung und das Scheinwerfermodul nun eine Baueinheit bzw. ein einziges Montageelement ausbilden, das am Fahrzeug verbaut wird. Somit muss die Sprüheinrichtung nicht mehr bei der Montage am Fahrzeug relativ zu dem Scheinwerfermodul ausgerichtet bzw. positioniert werden. Diese Ausrichtung bzw. Positionierung kann beispielsweise bereits vor der Montage der Baueinheit an dem Fahrzeug erfolgen. Ebenso wäre es beispielsweise auch denkbar, die erfindungsgemäße Baueinheit derart auszubilden, dass eine Einstellung der Ausrichtung bzw. der Position der Sprüheinrichtung relativ zu dem Scheinwerfermodul nicht mehr erforderlich ist. Des Weiteren wird mit der erfindungsgemäßen Baueinheit auch auf einfache Weise sichergestellt, dass die zu reinigenden Flächen des Abdeckelements zuverlässig mittels der Sprüheinrichtung besprüht werden können.

Grundsätzlich wäre es natürlich möglich, die Sprüheinrichtung unlösbar an dem Scheinwerfermodul festzulegen. Erfindungsgemäß ist jedoch eine Fixiereinrichtung vorgesehen, mittels der die Sprüheinrichtung lösbar an dem Scheinwerfermodul festgelegt werden kann. Auf diese Weise kann die Verbindung von Sprüheinrichtung und Scheinwerfermodul beispielsweise gelöst werden, wenn die Sprüheinrichtung defekt ist. Die gelöste Sprüheinrichtung kann dann einfach ausgetauscht oder repariert werden.

Erfindungsgemäß weist die Fixiereinrichtung wenigstens ein scheinwerfermodulseitiges Fixierelement auf, wobei das Fixierelement mit einem Überstandsbereich von einem Gehäuse des Scheinwerfermoduls abragt und/oder übersteht, und wobei die Sprüheinrichtung an dem Überstandsbereich festgelegt werden kann. Mittels eines derart ausgebildeten Fixierelements kann die Sprüheinrichtung besonders einfach an dem Scheinwerfermodul montiert werden.

Erfindungsgemäß ist das Fixierelement stabförmig ausgebildet, um das Fixierelement einfach und funktionsoptimiert auszubilden. Weiter ist die Sprüheinrichtung mittels einer Schraubverbindung lösbar an dem Überstandsbereich festgelegt werden. Dadurch kann die Sprüheinrichtung einfach und zuverlässig an dem Überstandsbereich festgelegt werden.

Vorzugsweise ist das stabartige Fixierelement mit einem Endbereich, insbesondere materialeinheitlich und/oder einstückig, an dem Gehäuse festgelegt, um das Scheinwerfermodul einfach und funktionsoptimiert zu gestalten. Weiter bevorzugt ist dieser Endbereich domartig ausgebildet, um die Anbindung des Fixierelements an dem Gehäuse zu verbessern.

In einer weiteren bevorzugten Ausgestaltung ragt das wenigstens eine Fixierelement, in Fahrzeug-Hochrichtung gesehen, nach unten von dem Gehäuse des Scheinwerfermoduls ab. Weiter bevorzugt weist die Fixiereinrichtung mehrere Fixierelement auf, die derart angeordnet sind, dass die Sprüheinrichtung im montierten Zustand zumindest bereichsweise, in Fahrzeug-Querrichtung gesehen, zwischen den mehreren Fixierelementen angeordnet ist. Auf diese Weise ist die Baueinheit besonders kompakt ausgebildet. Zudem kann die Sprüheinrichtung dadurch besonders zuverlässig an dem Scheinwerfermodul festgelegt werden.

Vorzugsweise ist die Sprüheinrichtung, in Fahrzeug-Hochrichtung gesehen, unterseitig an dem Scheinwerfermodul angeordnet. Weiter bevorzugt ist die Sprüheinrichtung, in Fahrzeug-Querrichtung gesehen, mittig an dem Scheinwerfermodul angeordnet, um das Abdeckelement möglichst großflächig mit der Flüssigkeit besprühen zu können. Bevorzugt ist die Sprüheinrichtung zudem mit einem definierten Spaltabstand beabstandet von dem Scheinwerfermodul angeordnet, um die Montage der Sprüheinrichtung zu vereinfachen.

In einer konkreten Ausgestaltung kann die Sprüheinrichtung einen Sprühkopf mit wenigstens einer Sprühdüse aufweisen, mittels der das Abdeckelement zumindest bereichsweise mit der Flüssigkeit besprüht werden kann. Bevorzugt ist dabei vorgesehen, dass der Sprühkopf mehrere Sprühdüsen aufweist, um einen möglichst großen Bereich der Oberfläche des Abdeckelements mit der Flüssigkeit besprühen zu können.

Bevorzugt weist die Sprüheinrichtung einen Verbindungskörper auf, mittels dem die Sprüheinrichtung, insbesondere starr und/oder unbeweglich, an dem Scheinwerfermodul festgelegt ist. Es kann dann eine Stelleinrichtung vorgesehen sein, mittels der der Sprühkopf relativ zu dem Verbindungskörper zwischen einer Verstauposition und einer Sprühposition verlagert werden kann, wobei in der Sprühposition das Abdeckelement mit der Flüssigkeit besprüht werden kann. Auf diese Weise ist die Sprüheinrichtung besonders flexibel ausgebildet, da der Sprühkopf zwischen der Verstauposition und der Sprühposition verlagert werden kann.

Somit kann der Sprühkopf in die Sprühposition verlagert werden, wenn das Abdeckelement mit der Flüssigkeit besprüht werden soll. Soll das Abdeckelement nicht mit der Flüssigkeit besprüht werden, kann der Sprühkopf in die Verstauposition verlagert werden. Grundsätzlich wäre es natürlich möglich, die Stelleinrichtung durch eine Schwenkeinrichtung zu bilden, mittels dem der Sprühkopf relativ zu dem Verbindungskörper verschwenkt werden kann. Bevorzugt ist die Stelleinrichtung jedoch durch eine Linearverstelleinrichtung gebildet, mittels der der Sprühkopf relativ zu dem Verbindungskörper, insbesondere in Fahrzeug-Längsrichtung, linear verlagert werden kann. Dadurch ist die Stelleinrichtung besonders einfach und platzsparend ausgebildet.

Weiter bevorzugt weist der Sprühkopf wenigstens eine Abdeckplatte auf, mittels der im montierten Zustand der Baueinheit bei der in der Verstauposition angeordnetem Sprühkopf eine Sprühkopf-Ausnehmung in einem Fahrzeug-Außenverkleidungselement, insbesondere in einer Frontschürze des Fahrzeugs, zumindest bereichsweise abgedeckt und/oder überdeckt ist. Auf diese Weise kann der Sprühkopf in der Verstauposition äußerlich unsichtbar angeordnet werden.

Vorzugsweise ist eine Stelleinrichtung vorgesehen, mittels der die Richtung des Sprühstrahls der Sprühdüse eingestellt bzw. verstellt werden kann. Dadurch kann auf einfache Weise gewährleistet werden, dass die zu reinigen Flächen des Abdeckelements mittels der Sprüheinrichtung besprüht werden können. Bevorzugt ist dabei vorgesehen, dass mittels der Stelleinrichtung die Sprühdüse relativ zu dem Sprühkopf verlagert und/oder verschwenkt werden kann, um die Richtung des Sprühstrahls auf besonders einfache Weise einstellen zu können. Weiter bevorzugt weist die Sprüheinrichtung eine Verbindungseinrichtung auf, mittels der die Sprüheinrichtung mit einer Zuführleitung der Scheinwerfer-Reinigungsanlage zur Zuführung der Flüssigkeit an die Sprüheinrichtung, insbesondere lösbar, verbunden werden kann.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer perspektivischen Darstellung ein Scheinwerfermodul einer erfindungsgemäßen Baueinheit;
- Fig. 2: in einer perspektivischen Darstellung einen Teil der Baueinheit;
- Fig. 3: in einer Ansicht von unten einen Teil der Baueinheit in einer Verstaustellung;
- Fig. 4: in einer Darstellung gemäß Fig. 3 die Baueinheit in einer Sprühstellung;
- Fig. 5: in einer perspektivischen Darstellung einen Teil eines Fahrzeugs mit der Baueinheit in der Sprühstellung; und
- Fig. 6: in einer Darstellung gemäß Fig. 5 die Baueinheit in der Verstaustellung.

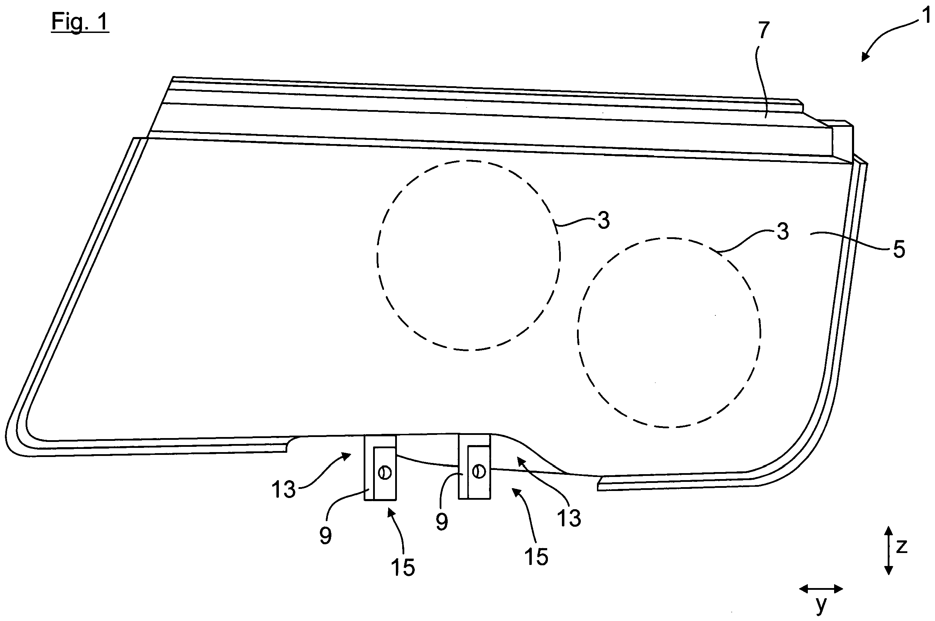

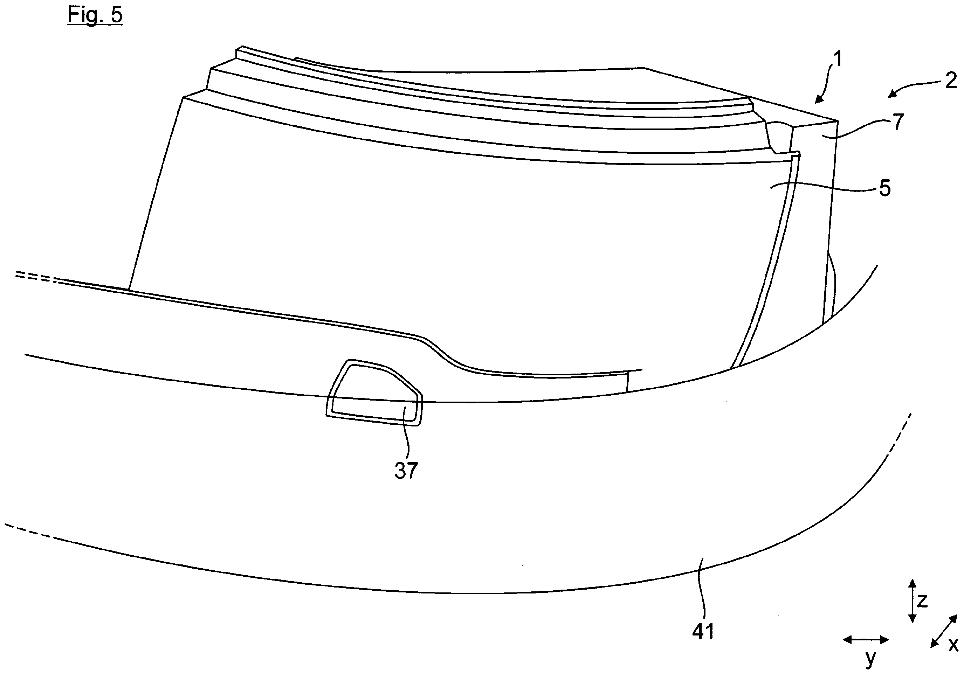

In Fig. 1 ist ein Scheinwerfermodul 1 eines Fahrzeugs 2 (Fig. 5) in einer Ansicht von Vorne gezeigt. Das Scheinwerfermodul 1 weist hier mehrere, hier beispielhaft zwei, in Fig. 1 mit gestrichelten Linien angedeutete Leuchteinrichtungen 3, beispielsweise Glühlampen, auf, mittels denen Lichtstrahlen abgestrahlt werden können. Die Leuchteinrichtungen 3 sind mit einem transparenten bzw. lichtdurchlässigen Abdeckelement 5 abgedeckt. Auf diese Weise können von den Leuchteinrichtungen 3 abgestrahlte Lichtstrahlen durch das lichtdurchlässige Abdeckelement 5 hindurch nach außen strahlen.

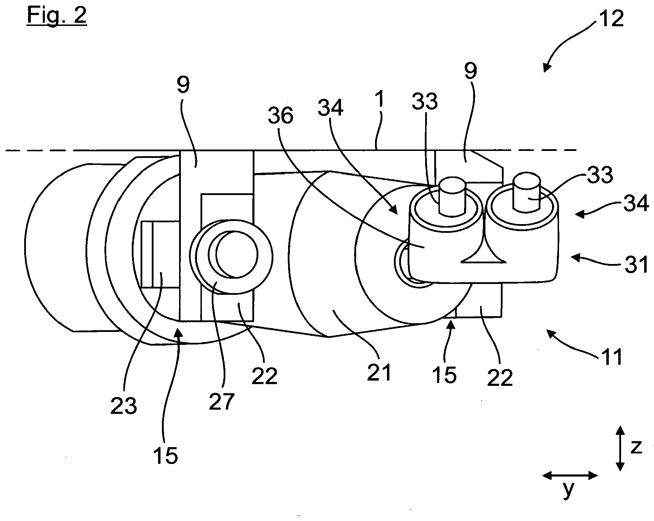

Wie in Fig. 1 weiter gezeigt ist, ist das Abdeckelement 5 hier beispielhaft an einem Gehäuse 7 des Scheinwerfermoduls 1 festgelegt. Das Gehäuse 7 weist hier beispielhaft zwei stabförmige Fixierelemente 9 auf, mittels denen eine Sprüheinrichtung 11 (Fig. 2) einer Scheinwerfer-Reinigungsanlage des Fahrzeugs 2 lösbar an dem Scheinwerfermodul 1 festgelegt werden kann. Mittels der Sprüheinrichtung 11 kann das Abdeckelement 5 mit einer Flüssigkeit besprüht werden, um das Abdeckelement 5 zu reinigen. Das Scheinwerfermodul 1 und die Sprüheinrichtung 11 bilden eine Baueinheit 12 (Fig. 2) aus. Auf diese Weise wird die Montage der Sprüheinrichtung 11 deutlich vereinfacht, da diese nicht mehr separat von dem Scheinwerfermodul 1 an dem Fahrzeug 2 befestigt werden muss.

Die Fixierelemente 9 sind hier beispielhaft, in Fahrzeug-Hochrichtung z gesehen, unterseitig an dem Scheinwerfermodul 1 angeordnet. Zudem sind die Fixierelemente 9 hier, in Fahrzeug-Querrichtung y gesehen, mittig an dem Scheinwerfermodul 1 angeordnet. Weiter sind die Fixierelemente 9 hier derart angeordnet, dass die Sprüheinrichtung 11 im montierten Zustand bereichsweise, in Fahrzeug-Querrichtung y gesehen, zwischen den beiden Fixierelementen 9 angeordnet ist. Gemäß Fig. 1 ist hier zudem jedes stabförmige Fixierelement 9 mit einem Endbereich 13 materialeinheitlich und/oder einstückig an dem Gehäuse 7 des Scheinwerfermoduls 1 festgelegt und in Fahrzeug-Hochrichtung z ausgerichtet. Zudem ragt hier jedes stabförmige Fixierelement 9 mit einem Überstandsbereich 15, in Fahrzeug-Hochrichtung z gesehen, nach unten von dem Gehäuse 7 des Scheinwerfermoduls 1 ab.

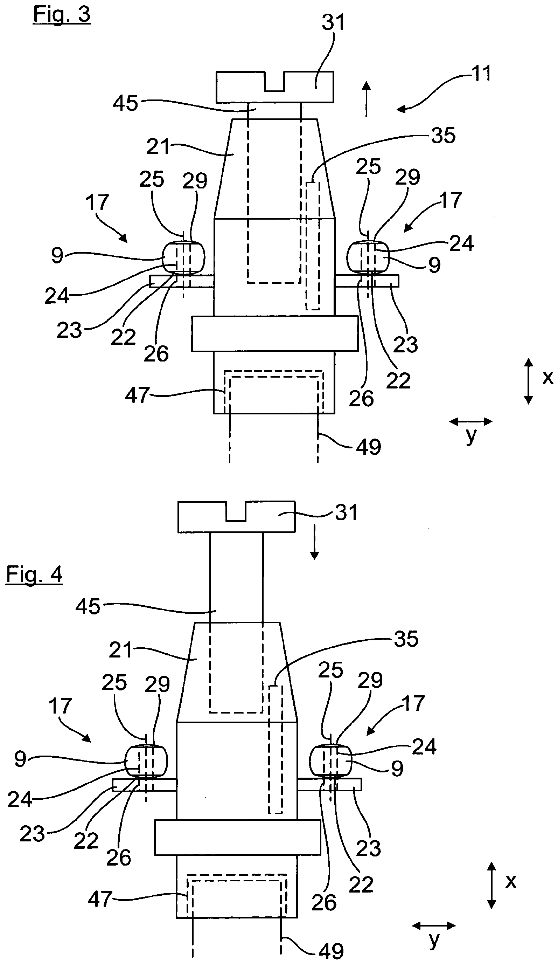

Wie in Fig. 3 gezeigt ist, wird die Sprüheinrichtung 11 hier beispielhaft mittels Schraubverbindungen 17 an den Überstandsbereichen 15 der Fixierelemente 9 festgelegt. Im montierten Zustand der Sprüheinrichtung 11 ist hier beispielhaft jeder Überstandsbereich 15 mit einem, in Fahrzeug-Längsrichtung x gesehen, hinteren Wandbereich 22 in Anlage mit einer in Fahrzeug-Querrichtung y seitlich nach außen von einem Gehäuse 21 der Sprüheinrichtung 11 abragenden Lasche 23. Die hinteren Wandbereiche 22 sind hier beispielhaft abgeflacht, um eine flächige Anlage der Überstandsbereiche 15 an den Laschen 23 sicherzustellen. Die Laschen 23 sind hier materialeinheitlich und/oder einstückig mit dem Gehäuse 21 verbunden.

Zudem ist im montierten Zustand der Sprüheinrichtung 11 hier beispielhaft eine Schraube 25 mit einem definierten Spaltabstand durch eine Ausnehmung 24 des jeweiligen Überstandsbereichs 15 geführt und in eine an der jeweiligen Lasche 23 ausgebildeten Gewindebohrung 26 eingeschraubt. Weiter ist im montierten Zustand der Sprüheinrichtung 11 ein Schraubenkopf 27 (Fig. 2) der Schraube 25 in Anlage mit einem, Fahrzeug-Längsrichtung x gesehen, vorderen Wandbereich 29 des jeweiligen Überstandsbereichs 15. Die vorderen Wandbereiche 29 sind hier beispielhaft ebenfalls abgeflacht, um eine flächige Anlage der Überstandsbereiche 15 an den Schraubenköpfen 27 sicherzustellen.

Wie in Fig. 2 gezeigt ist, weist die Sprüheinrichtung 11 hier einen Sprühkopf 31 auf, der hier beispielhaft mehrere Sprühdüsen 33 aufweist, mittels denen das Abdeckelement 5 mit der Flüssigkeit besprüht werden kann. Jede der Sprühdüsen 33 ist hier beispielhaft mittels einer Kugelgelenkverbindung 34 an dem Sprühkopf 31 festgelegt. Auf diese Weise können die Sprühdüsen 33 hier relativ zu einem Grundkörper 36 des Sprühkopfs 31 verschwenkt und somit die Richtung des Sprühstrahls der jeweiligen Sprühdüse 33 eingestellt bzw. verstellt werden. Die Verschwenkung der Sprühdüsen 33 relativ zu dem Sprühkopf 31 erfolgt hier beispielhaft manuell.

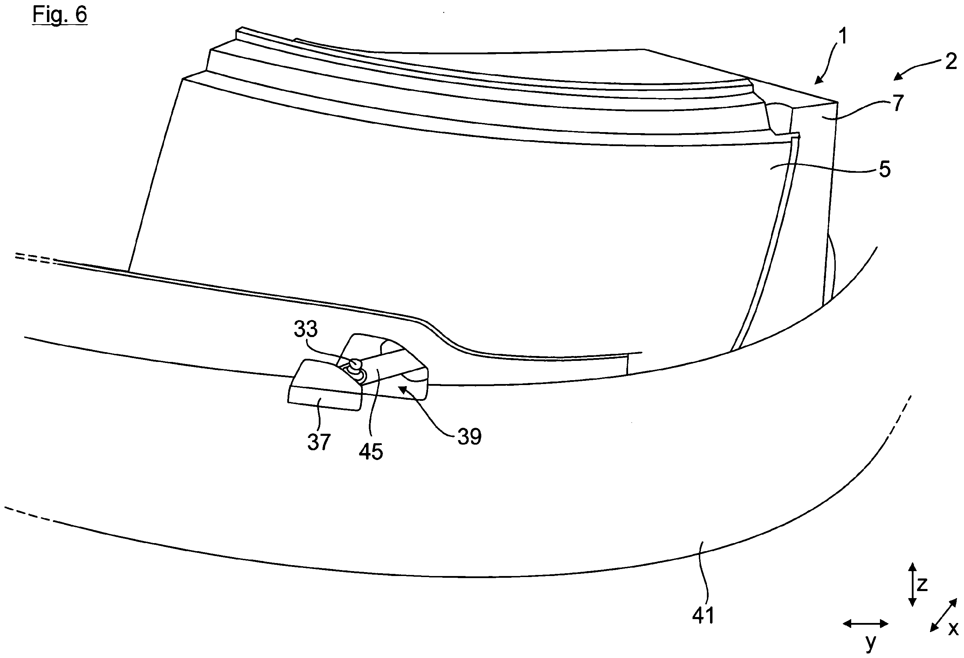

Gemäß Fig. 3 weist die Sprüheinrichtung 11 hier weiter auch eine mit gestrichelten Linien angedeutete Linearverstelleinrichtung 35 auf, mittels der der Sprühkopf 31 relativ zu dem Gehäuse 21 der Sprüheinrichtung 11 in Fahrzeug-Längsrichtung x verlagert werden kann. Auf diese Weise kann der Sprühkopf 31 zwischen einer in Fig. 3 und Fig. 5 gezeigten Verstauposition und einer in Fig. 4 und Fig. 6 gezeigten Sprühposition verlagert werden. In der in Fig. 5 gezeigten Verstauposition deckt eine an dem Sprühkopf 31 der Sprüheinrichtung 11 festlegbare Abdeckplatte 37 eine Sprühkopf-Ausnehmung 39 in einer Frontschürze 41 des Fahrzeugs 2 ab. In der in Fig. 6 gezeigten Sprühposition ist der Sprühkopf 31 im Vergleich zu der Verstauposition in Fahrzeug-Längsrichtung x nach vorne verlagert, so dass der Sprühkopf 31, in Fahrzeug-Längsrichtung x gesehen, nach vorne von der Frontschürze 41 abragt. In der Sprühposition kann das Abdeckelement 5 dann mittels der Sprühdüsen 33 besprüht werden.

Wie in Fig. 3 weiter gezeigt ist, ist der Sprühkopf 31 der Sprüheinrichtung 11 hier beispielhaft an einem aus dem Gehäuse 21 ragenden Endbereich eines teilweise im Inneren des Gehäuses 21 angeordneten Stabelements 45 festgelegt. Zur Verlagerung des Sprühkopfs 31 von der Verstauposition in die Sprühposition wird das Stabelement 45 hier beispielhaft mittels der Linearverstelleinrichtung 35 aus dem Gehäuse 21 der Sprüheinrichtung 11 herausgefahren. Zur Verlagerung des Sprühkopfs 31 von der Sprühposition in die Verstauposition wird das Stabelement 45 hier mittels der Linearverstelleinrichtung 35 in das Gehäuse 21 der Sprüheinrichtung 11 hineingefahren.

Gemäß Fig. 3 weist die Sprüheinrichtung 11 hier weiter auch eine Verbindungseinrichtung 47 auf, mittels der die Sprüheinrichtung 11 lösbar mit einer Zuführleitung 49 der Scheinwerfer-Reinigungsanlage verbunden werden kann. Mittels der Zuführleitung 49 kann die in einem Flüssigkeits-Speicherbehälter der Scheinwerfer-Reinigungsanlage gespeicherte Flüssigkeit der Sprüheinrichtung 11 zugeführt werden. Die Sprüheinrichtung 11 wird hier beispielhaft mittels einer Steckverbindung lösbar mit der Zuführleitung 49 verbunden.

### Bezugszeichenliste

- 1: Scheinwerfermodul
- 2: Fahrzeug
- 3: Leuchteinrichtung
- 5: Abdeckelement
- 7: Gehäuse
- 9: Fixierelement
- 11: Sprüheinrichtung
- 13: Endbereich
- 15: Überstandsbereich
- 17: Schraubverbindung
- 19: Schraube
- 21: Gehäuse
- 22: hinterer Wandbereich
- 23: Lasche
- 24: Ausnehmung
- 25: Schraube
- 26: Gewindebohrung
- 27: Schraubenkopf
- 29: vorderer Wandbereich
- 31: Sprühkopf
- 33: Sprühdüse
- 34: Kugelgelenkverbindung
- 35: Linearverstelleinrichtung
- 36: Grundkörper
- 37: Abdeckplatte
- 39: Sprühkopf-Ausnehmung
- 41: Frontschürze
- 45: Stabelement
- 47: Verbindungseinrichtung
- 49: Zuführleitung

## Patentansprüche

1. Fahrzeug, insbesondere Nutzfahrzeug, mit einem Scheinwerfermodul (1), das ein lichtdurchlässiges Abdeckelement (5), insbesondere ein Scheinwerferglas, aufweist, mittels dem eine Leuchteinrichtung (3) des Scheinwerfermoduls (1) abgedeckt ist, und mit einer Scheinwerfer-Reinigungsanlage, mittels der das Abdeckelement (5) des Scheinwerfermoduls (1) reinigbar ist, wobei die Scheinwerfer-Reinigungsanlage eine Sprüheinrichtung (11) aufweist, mittels der das Abdeckelement (5) mit einer Flüssigkeit, insbesondere mit einer Reinigungsflüssigkeit, besprühbar ist, wobei die Sprüheinrichtung (11) dem Scheinwerfermodul (1) zugeordnet ist, so dass die Sprüheinrichtung (11) und das Scheinwerfermodul (1) eine Baueinheit (12) ausbilden, wobei eine Fixiereinrichtung vorgesehen ist, mittels der die Sprüheinrichtung (11) lösbar an dem Scheinwerfermodul (1) festlegbar ist, wobei die Fixiereinrichtung zwei scheinwerfermodulseitige, stabförmige Fixierelemente (9) aufweist, wobei jedes Fixierelement (9) mit einem Überstandsbereich (15) von einem Gehäuse (7) des Scheinwerfermoduls (1) übersteht und/oder abragt, wobei die Sprüheinrichtung (11) mittels einer Schraubverbindung lösbar an dem Überstandsbereich (15) des jeweiligen Fixierelements (9) festlegbar ist, **dadurch gekennzeichnet,**
**dass** die Fixierelemente (9) derart angeordnet sind, dass die Sprüheinrichtung (11) im montierten Zustand zumindest bereichsweise, in Fahrzeug-Querrichtung (y) gesehen, zwischen den Fixierelementen (9) angeordnet ist, und
**dass** im montierten Zustand der Sprüheinrichtung (11) jeder Überstandsbereich (15) mit einem, in Fahrzeug-Längsrichtung (x) gesehen, hinteren Wandbereich (22) in Anlage mit einer in Fahrzeug-Querrichtung (y) seitlich nach außen von einem Gehäuse (21) der Sprüheinrichtung (11) abragenden Lasche (23) ist, wobei die hinteren Wandbereiche (22) abgeflacht sind, dergestalt, dass eine flächige Anlage der Überstandsbereiche (15) an den Laschen (23) sichergestellt ist.

2. Fahrzeug nach Anspruch 1, **dadurch gekennzeichnet, dass** das stabartige Fixierelement (9) mit einem Endbereich (13), insbesondere materialeinheitlich und/oder einstückig, an dem Gehäuse (7) des Scheinwerfermoduls (1) festgelegt ist, wobei bevorzugt vorgesehen ist, dass dieser Endbereich (13) domartig ausgebildet ist.

3. Fahrzeug nach Anspruch 1 oder 2, **dadurch gekennzeichnet, dass** das wenigstens eine Fixierelement (9), in Fahrzeug-Hochrichtung (z) gesehen, nach unten von dem Gehäuse (7) des Scheinwerfermoduls (1) abragt.

4. Fahrzeug nach einem der vorhergehenden Ansprüche, **dadurch gekennzeichnet, dass** die Sprüheinrichtung (11), in Fahrzeug-Hochrichtung (z) gesehen, unterseitig an dem Scheinwerfermodul (1) angeordnet ist, und/oder dass die Sprüheinrichtung (11), in Fahrzeug-Querrichtung (y) gesehen, mittig an dem Scheinwerfermodul (1) angeordnet ist, und/oder dass die Sprüheinrichtung (11) mit einem definierten Spaltabstand beabstandet von dem Scheinwerfermodul (1) angeordnet ist.

5. Fahrzeug nach einem der vorhergehenden Ansprüche, **dadurch gekennzeichnet, dass** die Sprüheinrichtung (11) einen Sprühkopf (31) mit wenigstens einer Sprühdüse (33) aufweist, mittels der das Abdeckelement (5) zumindest bereichsweise mit der Flüssigkeit besprühbar ist, wobei bevorzugt vorgesehen ist, dass der Sprühkopf (31) mehrere Sprühdüsen (33) aufweist.

6. Fahrzeug nach Anspruch 5, **dadurch gekennzeichnet, dass** die Sprüheinrichtung (11) einen Verbindungskörper (21, 23) aufweist, mittels dem die Sprüheinrichtung (11), insbesondere starr und/oder unbeweglich, an dem Scheinwerfermodul (1) festgelegt ist, wobei eine Stelleinrichtung vorgesehen ist, mittels der der Sprühkopf (11) relativ zu dem Verbindungskörper (21, 23) zwischen einer Verstauposition und einer Sprühposition verlagerbar ist, wobei in der Sprühposition das Abdeckelement (5) mittels der wenigstens einen Sprühdüse (33) besprühbar ist.

7. Fahrzeug nach Anspruch 6, **dadurch gekennzeichnet, dass** die Stelleinrichtung durch eine Linearverstelleinrichtung (35) gebildet ist, mittels der der Sprühkopf (31) relativ zu dem Verbindungskörper (21, 23), insbesondere in Fahrzeug-Längsrichtung (x), linear verlagerbar ist.

8. Fahrzeug nach Anspruch 6 oder 7, **dadurch gekennzeichnet, dass** der Sprühkopf (31) wenigstens eine Abdeckplatte (37) aufweist, mittels der im monierten Zustand der Baueinheit (12) bei in der Verstauposition angeordnetem Sprühkopf (31) eine Sprühkopf-Ausnehmung (39) in einem Fahrzeug-Außenverkleidungselement, insbesondere in einer Frontschürze (41) des Fahrzeugs (2), zumindest bereichsweise abgedeckt und/oder überdeckt ist.

9. Fahrzeug nach einem der Ansprüche 5 bis 8, **dadurch gekennzeichnet, dass** eine Stelleinrichtung (34) vorgesehen ist, mittels der die Richtung des Sprühstrahls der Sprühdüse (33) einstellbar und/oder verstellbar ist, wobei bevorzugt vorgesehen ist, dass mittels der Stelleinrichtung (34) die Sprühdüse (33) relativ zu einem Grundkörper (36) des Sprühkopfs (31) verlagerbar und/oder verschwenkbar ist.

10. Fahrzeug nach einem der vorhergehenden Ansprüche, **dadurch gekennzeichnet, dass** die Sprüheinrichtung (11) eine Verbindungseinrichtung (47) aufweist, mittels der die Sprüheinrichtung (11) mit einer Zuführleitung (49) der Scheinwerfer-Reinigungsanlage zur Zuführung der Flüssigkeit an die Sprüheinrichtung (11), insbesondere lösbar, verbindbar ist.

## Claims

1. Vehicle, in particular a commercial vehicle, having a headlight module (1) which has a light-permeable coupling element (5), in particular a headlight lens, by means of which a lighting device (3) of the headlight module (1) is covered, and having a headlight-cleaning system by means of which the covering element (5) of the headlight module (1) can be cleaned, wherein the headlight-cleaning system has a spraying device (11) by means of which the covering element (5) can be sprayed with a liquid, in particular with a cleaning liquid, wherein the spraying device (11) is assigned to the headlight module (1) such that the spraying device (11) and the headlight module (1) form a structural unit (12), wherein a fixing device is provided by means of which the spraying device (11) can be releasably fastened to the headlight module (1), wherein the fixing device has two headlight module-side, bar-shaped fixing elements (9), wherein each fixing element (9) projects and/or protrudes from a housing (7) of the headlight module (1) by an overhang region (15), wherein the spraying device (11) can be releasably fastened to the overhang region (15) of the respective fixing element (9) by means of a screw connection, **characterized**
**in that** the fixing elements (9) are arranged in such a way that, in the mounted state, the spraying device (11) is arranged at least in certain regions, as seen in the vehicle transverse direction (y), between the fixing elements (9), and
**in that**, in the mounted state of the spraying device (11), each overhang region (15) has a rear wall region (22), as seen in the vehicle longitudinal direction (x), in bearing contact with a tab (23) which, in the vehicle transverse direction (y), projects laterally outwardly from a housing (21) of the spraying device (11), wherein the rear wall regions (22) are flattened off so as to ensure that the overhang regions (15) bear flat against the tabs (23).

2. Vehicle according to Claim 1, **characterized in that** the bar-like fixing element (9) is fastened to the housing (7) of the headlight module (1) by an end region (13), in particular in a materially uniform and/or integral manner, wherein there is preferably provision that this end region (13) is of dome-like design.

3. Vehicle according to Claim 1 or 2, **characterized in that**, as seen in the vehicle vertical direction (z), the at least one fixing element (9) protrudes downwardly from the housing (7) of the headlight module (1).

4. Vehicle according to one of the preceding claims, **characterized in that**, as seen in the vehicle vertical direction (z), the spraying device (11) is arranged on the lower side of the headlight module (1), and/or **in that**, as seen in the vehicle transverse direction (y), the spraying device (11) is arranged centrally on the headlight module (1), and/or **in that** the spraying device (11) is arranged at a distance from the headlight module (1) with a defined gap spacing.

5. Vehicle according to one of the preceding claims, **characterized in that** the spraying device (11) has a spraying head (31) with at least one spraying nozzle (33) by means of which the covering element (5) can be sprayed with the liquid at least in certain regions, wherein there is preferably provision that the spraying head (31) has a plurality of spraying nozzles (33).

6. Vehicle according to Claim 5, **characterized in that** the spraying device (11) has a connection body (21, 23) by means of which the spraying device (11) is fastened to the headlight module (1), in particular rigidly and/or immovably, wherein an adjusting device is provided by means of which the spraying head (11) can be displaced relative to the connection body (21, 23) between a stowed position and a spraying position, wherein the covering element (5) can be sprayed by means of the at least one spraying nozzle (33) in the spraying position.

7. Vehicle according to Claim 6, **characterized in that** the adjusting device is formed by a linear adjusting device (35) by means of which the spraying head (31) can be displaced linearly relative to the connection body (21, 23), in particular in the vehicle longitudinal direction (x).

8. Vehicle according to Claim 6 or 7, **characterized in that** the spraying head (31) has at least one covering plate (37) by means of which, in the mounted state of the structural unit (12), and with the spraying head (31) arranged in the stowed position, a spraying head clearance (39) in a vehicle outer cladding element, in particular in a front spoiler (41) of the vehicle (2), is covered and/or shielded at least in certain regions.

9. Vehicle according to one of Claims 5 to 8, **characterized in that** an adjusting device (34) is provided by means of which the direction of the spraying jet of the spraying nozzle (33) can be set and/or adjusted, wherein there is preferably provision that the spraying nozzle (33) can be displaced and/or pivoted relative to a basic body (36) of the spraying head (31) by means of the adjusting device (34).

10. Vehicle according to one of the preceding claims, **characterized in that** the spraying device (11) has a connecting device (47) by means of which the spraying device (11) can be connected, in particular releasably, to a supply line (49) of the headlight-cleaning system for supplying the liquid to the spraying device (11).

## Revendications

1. Véhicule, en particulier véhicule utilitaire, équipé d'un module de phare (1) qui comprend un élément cache transparent (5), en particulier une glace de phare, élément cache au moyen duquel un dispositif d'éclairage (3) du module de phare (1) est recouvert, et équipé d'un système de nettoyage de phare au moyen duquel l'élément cache (5) du module de phare (1) peut être nettoyé, dans lequel le système de nettoyage de phare comprend un dispositif de pulvérisation (11) au moyen duquel l'élément cache (5) peut être aspergé d'un liquide, en particulier d'un liquide de nettoyage, dans lequel le dispositif de pulvérisation (11) est associé au module de phare (1), de telle sorte que le dispositif de pulvérisation (11) et le module de phare (1) forment une unité structurale (12), dans lequel un dispositif de fixation est prévu, au moyen duquel le dispositif de pulvérisation (11) peut être fixé de manière amovible au module de phare (1), dans lequel le dispositif de fixation comprend deux éléments de fixation (9) en forme de barres du côté du module de phare, dans lequel chaque élément de fixation (9) dépasse et/ou fait saillie à partir d'un boîtier (7) du module de phare (1) par une région en saillie (15), dans lequel le dispositif de pulvérisation (11) peut être fixé de manière amovible à la région en saillie (15) de l'élément de fixation (9) respectif au moyen d'une liaison par vissage, **caractérisé en ce que**
les éléments de fixation (9) sont disposés de telle sorte que, vu dans la direction transversale du véhicule (y), le dispositif de pulvérisation (11) est, à l'état monté, disposé entre les éléments de fixation (9) au moins dans certaines régions, et
**en ce qu'**à l'état monté du dispositif de pulvérisation (11), chaque région en saillie (15) est, par une région de paroi arrière (22) vue dans la direction longitudinale du véhicule (x), en appui contre une languette (23) faisant saillie latéralement vers l'extérieur dans la direction transversale du véhicule (y) à partir d'un boîtier (21) du dispositif de pulvérisation (11), dans lequel les régions de paroi arrière (22) sont aplaties, de telle sorte qu'un appui plan des régions en saillie (15) contre les languettes (23) soit assuré.

2. Véhicule selon la revendication 1, **caractérisé en ce que** l'élément de fixation (9) en forme de barre est fixé, par une région d'extrémité (13), en particulier de manière venue de matière et/ou d'un seul tenant, au boîtier (7) du module de phare (1), cette région d'extrémité (13) étant réalisée de préférence en forme de dôme.

3. Véhicule selon la revendication 1 ou 2, **caractérisé en ce qu'**au moins un élément de fixation (9) fait saillie vers le bas à partir du boîtier (7) du module de phare (1), vu dans la direction verticale du véhicule (z).

4. Véhicule selon l'une des revendications précédentes, **caractérisé en ce que** le dispositif de pulvérisation (11) est, vu dans la direction verticale du véhicule (z), disposé du côté inférieur au niveau du module de phare (1), et/ou **en ce que** le dispositif de pulvérisation (11) est, vu dans la direction transversale du véhicule (y), disposé centralement au niveau du module de phare (1), et/ou **en ce que** le dispositif de pulvérisation (11) est disposé de manière espacée du module de phare (1) par une distance interstitielle définie.

5. Véhicule selon l'une des revendications précédentes, **caractérisé en ce que** le dispositif de pulvérisation (11) comprend une tête de pulvérisation (31) dotée d'au moins une buse de pulvérisation (33) au moyen de laquelle l'élément cache (5) peut être aspergé de liquide au moins dans certaines régions, la tête de pulvérisation (31) comprenant de préférences plusieurs buses de pulvérisation (33).

6. Véhicule selon la revendication 5, **caractérisé en ce que** le dispositif de pulvérisation (11) comprend un corps de liaison (21, 23) au moyen duquel le dispositif de pulvérisation (11) est fixé au module de phare (1) en particulier de manière rigide et/ou fixe, un dispositif de réglage étant prévu, au moyen duquel la tête de pulvérisation (11) est déplaçable par rapport au corps de liaison (21, 23) entre une position de rangement et une position de pulvérisation, l'élément cache (5) pouvant être aspergé au moyen de ladite au moins une buse de pulvérisation (33) dans la position de pulvérisation.

7. Véhicule selon la revendication 6, **caractérisé en ce que** le dispositif de réglage est formé par un dispositif de déplacement linéaire (35) au moyen duquel la tête de pulvérisation (31) est déplaçable linéairement par rapport au corps de liaison (21, 23), en particulier dans la direction longitudinale du véhicule (x).

8. Véhicule selon la revendication 6 ou 7, **caractérisé en ce que** la tête de pulvérisation (31) comprend au moins une plaque de recouvrement (37) au moyen de laquelle, à l'état monté de l'unité structurale (12), lorsque la tête de pulvérisation (31) est disposée dans la position de rangement, un évidement (39) de tête de pulvérisation dans un élément d'habillage extérieur de véhicule, en particulier dans une jupe avant (41) du véhicule (2), est masqué et/ou recouvert au moins dans certaines régions.

9. Véhicule selon l'une des revendications 5 à 8, **caractérisé en ce qu'**un dispositif de réglage (34) est prévu, au moyen duquel la direction du jet de pulvérisation de la buse de pulvérisation (33) est réglable et/ou déplaçable, la buse de pulvérisation (33) pouvant en particulier être déplacée et/ou pivotée par rapport à un corps de base (36) de la tête de pulvérisation (31) au moyen du dispositif de réglage (34).

10. Véhicule selon l'une des revendications précédentes, **caractérisé en ce que** le dispositif de pulvérisation (11) comprend un dispositif de liaison (47) au moyen duquel le dispositif de pulvérisation (11) peut être relié, en particulier de manière amovible, à une conduite d'amenée (49) du système de nettoyage de phare servant à l'amenée du liquide au dispositif de pulvérisation (11).
